# Europäisches Patentamt

# European Patent Office

# Office européen des brevets

(19)

(11) Veröffentlichungsnummer: **0 095 735**
**B1**

(12) **EUROPÄISCHE PATENTSCHRIFT**

(45) Veröffentlichungstag der Patentschrift:
30.03.88

(21) Anmeldenummer: **83105229.5**

(22) Anmeldetag: **26.05.83**

(51) Int. Cl.⁴: **G 05 D 3/14,** G 05 D 1/00,
B 64 C 13/50, G 05 B 5/01

(54) Einrichtung zur Begrenzung der Kommandosignale für einen Stellmotor.

(30) Priorität: **29.05.82 DE 3220491**

(43) Veröffentlichungstag der Anmeldung:
**07.12.83 Patentblatt 83/49**

(45) Bekanntmachung des Hinweises auf die Patenterteilung:
**30.03.88 Patentblatt 88/13**

(84) Benannte Vertragsstaaten:
**FR GB IT SE**

(56) Entgegenhaltungen:
**EP - A - 0 036 437**
**EP - A - 0 049 306**
**DE - A - 2 617 319**
**US - A - 3 046 465**
**US - A - 4 030 011**
**US - A - 4 198 017**
**US - A - 4 242 622**

(73) Patentinhaber: **Hofinger, Georg, Kufsteiner Strasse 28,
D-8200 Rosenheim (DE)**
Patentinhaber: **Rockelmann, Julius, Forsthaus,
D-8201 Maxlrain (DE)**
Patentinhaber: **Fenzl, Josef, Bernatzikstrasse 12,
D-8000 München 81 (DE)**

(72) Erfinder: **Hofinger, Georg, Kufsteiner Strasse 28,
D-8200 Rosenheim (DE)**

(74) Vertreter: **Frohwitter, Bernhard et al, Galileiplatz 1,
8000 München 80 (DE)**

**Beschreibung**

Die Erfindung betrifft eine Einrichtung zur Begrenzung der Kommandosignale für einen Stellmotor, insbesondere bei Stellmotoren für die Betätigung von Flugzeugeinrichtungen wie Stellflächen.

Technische Regelkreise in Flugzeugen für die Verstellung der Stellflächen des Flugzeuges sind bekannt, siehe DE-OS 26 17 319 und US-PS 4 198 017. Insbesondere bei modernen Hochleistungsflugzeugen ist es aus den unter anderem in der DE-OS 26 17 319 geschilderten Gründen bekannt, das herkömmliche Regelsystem für die Verstellung von Flugzeugflächen, welches aus dem Piloten, Steuerknüppelmechanik, Verstellfläche und mechanische Rückführung besteht, durch zusätzliche automatisch arbeitende Regelkreise zu ergänzen, um zum einen die Arbeit des Piloten zu erleichtern und zum anderen aber auch die Fliegbarkeit moderner Hochleistungsflugzeuge überhaupt sicherstellen zu können. Die hierfür eingesetzten Systeme sind in der Fachwelt unter ihren Abkürzungen CSAS (command and stability augmentation system) und auch SPILS (spin prevention and incidence limiting system) bekannt.

Wie aus dem genannten Stand der Technik bekannt, wirken diese Systeme mittelbar oder unmittelbar auf die hydraulischen oder auch elektrischen Stellmotoren für die Betätigung der zu verstellenden Flächen ein. Nicht gelöst ist bei den bekannten Systemen das Problem, dass solche technische Regelkreise im allgemeinen Nichtlinearitäten, vor allem in den Stelleinrichtungen bei Begrenzung und Sättigung enthalten. Hierdurch besteht die Gefahr von Dauerschwingungen. Eine besonders häufige Nichtlinearität wird durch die begrenzte Geschwindigkeit der Stellgrösse verursacht.

Aus der EP-A-36 437 ist eine Einrichtung zur Begrenzung von Signalen nach dem Oberbegriff des Anspruchs 1 bekannt. Diese Einrichtung beinhaltet einen Regler, der parallel zu einer Regelstrecke in eine Rückführung geschaltet ist. Der Regler muss ein I-Glied enthalten, das beim Auftreten bestimmter Signalveränderungen des Sollwerts kurzzeitig ausser Betrieb gesetzt wird. Parallel zu dem I-Glied ist ein P-Glied vorhanden, so dass sich die Sollwertänderungen am Ausgang der Regelstrecke voll auswirken können, bevor das I-Glied wieder eingeschaltet wird. Die Dauer des Abschaltens des I-Gliedes wird durch ein Dehnglied bestimmt. Das Dehnglied und das P-Glied müssen richtig dimensioniert und aufeinander abgestimmt sein, damit die Einrichtung ihre Funktion richtig erfüllen kann.

Aufgabe der Erfindung ist es daher, eine Einrichtung der eingangs genannten Art anzugeben, welche die Handhabbarkeit verbessert und darüber hinaus bei linearer Stabilität des Regelkreises Dauerschwingungen, die insbesondere durch die letztgenannte spezielle Nichtlinearität hervorgerufen werden, vermeidet.

Diese Aufgabe wird durch die im Anspruch 1 angegebene Einrichtung gelöst.

Weitere Ausgestaltungen der Erfindung ergeben sich aus den weiteren Unteransprüchen.

Von besonderem Vorteil ist die Verbesserung des dynamischen Verhaltens von Flugzeugregelsystemen im nichtlinearen Bereich. Als Folge davon kann an die Stellmotoren unter Beibehaltung der optimalen Dynamik geringerer Anforderungen hinsichtlich Abmessungen, Gewicht und Leistungen gestellt werden. Es wird mithin möglich, die relativ teuren Stellmotoren trotz Beibehaltung bzw. Erhöhung des Flugzeugverhaltens kostengünstiger auslegen zu können.

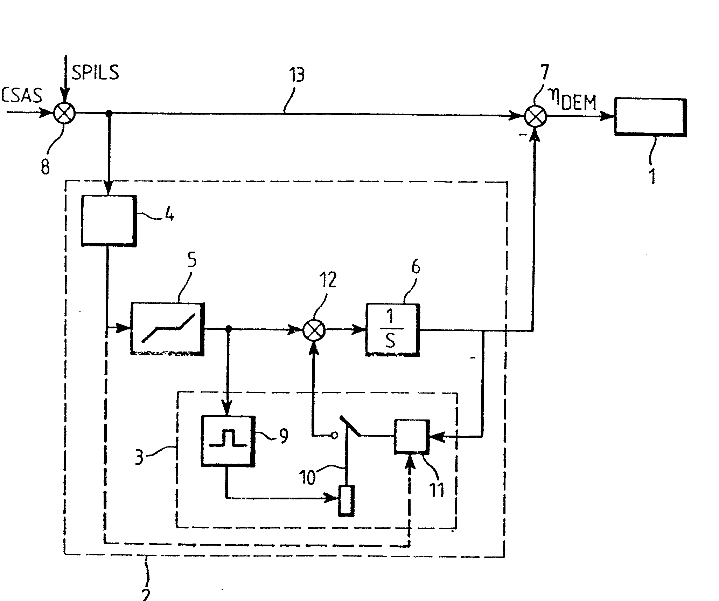

Die Erfindung ist anhand der einzigen Figur näher dargestellt. Diese zeigt das Blockschaltbild einer Einrichtung.

Die Einrichtung besteht im wesentlichen aus einem Hauptzweig 13 und einer dazu parallelen Schaltung 2. Ausserdem ist eine erste Summierstelle 8 und eine Summierstelle 7 vorhanden. Das Ausgangssignal der Summierstelle 7 stellt das Kommandosignal für einen Stellmotor 1 dar. Dieser Stellmotor 1 verstellt eine nicht näher dargestellte Steuerfläche eines ebenfalls nicht näher dargestellten Flugzeuges.

An der ersten Summierstelle 8 werden die aus den Systemen CSAS (command and stability augmentation system) und SPILS (spin prevention and incidence limiting system) herrührenden Signale aufsummiert. Das Ausgangssignal gelangt in den Hauptzweig 13 und stellt dort grundsätzlich das beispielsweise für ein Höhenruder geforderte Kommandosignal $\eta_{DEM}$ dar. Die Schaltung 2 – im folgenden noch näher erläutert – ist nur dann im Eingriff, wenn das Kommandosignal $\eta_{DEM}$ für den Stellmotor 1 sich in einem solchen Mass ändert, dass der Stellmotor 1 nicht mehr folgen kann, so dass z.B. die Handhabungseigenschaften sich bis zum Auftreten von Dauerschwingungen verschlechtern können. Wie bereits ausgeführt ist eine häufige Nichtlinearität in der begrenzten verarbeitbaren Geschwindigkeit des Kommandosignals $\eta_{DEM}$ begründet. Die Schaltung 2 ist daher in diesem Fall nur dann im Eingriff, wenn die Stellgeschwindigkeit einen zulässigen Wert überschreitet.

Die Schaltung 2 besteht im einzelnen aus einem Differenzierer 4, einem Schwellwertschalter 5, einem Integrator 6 und einem der Nullstellung des Integrators 6 dienenden Schalter 3. Ferner ist ein Summierer 12 vorhanden, der das Ausgangssignal des Schalters 3 für die Rückstellung des Integrators aufnimmt.

Der Differenzierer 4 misst die Laufgeschwindigkeit des Kommandosignals $\eta_{DEM}$. Im nachfolgenden Schwellwertschalter 5 wird das Ausgangssignal des Differenzierers 4 auf das Unter- oder Überschreiten vorgegebener zulässiger Werte überprüft. Befindet sich das Ausgangssignal des Differenzierers 4 innerhalb der von den zulässigen Werten vorgegebenen Grenzen, so bleibt die Schaltung 2 insgesamt ohne Einfluss auf das Kommandosignal $\eta_{DEM}$. Für den Fall, dass ein Über- oder Unterschreiten der vorgegebenen Grenzen festgestellt wird, wird der nachfolgende Integrator 6 mit den die zugelassenen Werte überschreitenden Werten beaufschlagt. Das Integral des Integrators 6 wird zu der Summierstelle 7 geführt und dort von dem im Hauptzweig 13 vorhandenen Kommandosignal $\eta_{DEM}$ subtrahiert. Auf diese Weise wird verhindert, dass sich am Stellmotor 1 eine Dauerschwingungen auslösende Laufgeschwindigkeitssättigung einstellen kann.

Für die Rückstellung des Integrators 6 ist der Schalter 3 vorgesehen. Das Ausgangssignal des Integrators 6 wird einem Begrenzer und Verstärker 11 zugeführt, dessen Ausgangssignal am Schliesser eines Relais 10 anliegt. Das Relais 10 wird über einen Impulsformer 9, der sein Eingangssignal vom Schwellwertschalter 5 erhält, betätigt. Sobald der Schliesser des Relais 10 schliesst, wird über einen Summierer 12 die Rücksetzung des Integrators 6 ausgelöst.

Der Begrenzer und Verstärker 11 wird so ausgelegt, dass die Rückführung des Integrators 6 gezielt verzögert erfolgt.

Eine weitere Verbesserung lässt sich erzielen, wenn das Ausgangssignal des Differenzierers 4 zur Einstellung des Schwellwertes des Begrenzers und Verstärkers 11 herangezogen wird.

Hierdurch wird der Verlauf des Eingangssignals berücksichtigt.

Eine einfache technische Ausbildung wird durch die Ausführung des Integrators 6 als Verzögerung 1. Ordnung – unter Weglassung des Schalters 3 – ermöglicht. Ebenso ist für den Differenzierer 4 eine einfache technische Realisierung als verzögernd differenzierendes Glied, $DT_1$-Glied, vorgesehen.

## Patentansprüche

1. Einrichtung zur Begrenzung der Kommandosignale für einen Stellmotor, insbesondere für Stellmotoren für die Betätigung von Flugzeugeinrichtungen wie Stellflächen, mit einer Schaltung (2), mit der ein dem Stellmotor zuzuführendes Eingangssignal (CSAS + SPILS) in Kommandosignale ($\eta_{DEM}$) abgeändert wird, die dieser, ohne in den Bereich nichtlinearen Verhaltens zu gelangen, verarbeiten kann, wobei die Schaltung (2) einen Differenzierer (4) aufweist, mit dem das Eingangssignal (CSAS + SPILS) differenziert wird, und eine anschliessende Schwellwertschaltung (5) mit nachgeschaltetem Integrator (6) vorhanden ist, dadurch gekennzeichnet, dass die Schaltung (2) parallel zu einem das Eingangssignal (CSAS + SPILS) führenden Haupteingangssignalpfad (13) für den Stellmotor (1) geschaltet ist, die Schwellwertschaltung (5) bei Unter- oder Überschreiten von vorgegebenen Werten, die ein Überschreiten der zulässigen maximalen Stellgeschwindigkeit anzeigen, den Integrator (6) mit den den vorgegebenen Wert überschreitenden Werten beaufschlagt, wobei das Integrator-Ausgangssignal in einer Summierstelle (7) vom Eingangssignal (CSAS + SPILS) der Einrichtung subtrahiert wird, um die Kommandosignale ($\eta_{DEM}$) zu bilden.

2. Einrichtung nach Anspruch 1, dadurch gekennzeichnet, dass der Integrator (6) mittels eines beim Überschreiten der Schwellwerte der Schwellwertschaltung (5) öffnenden und ansonsten geschlossenen Schalters (3) rücksetzbar ist.

3. Einrichtung nach Anspruch 2, dadurch gekennzeichnet, dass der Schalter (3) einen bei fehlendem Ausgangssignal des Schwellwertschalters (5) einen Impuls auslösenden Impulsformer (9) aufweist, über den ein Relais (10) schliessbar ist, welches das Rückführsignal des Integrators (6) auf den Eingang des Integrators (6) schaltet.

4. Einrichtung nach Anspruch 3, dadurch gekennzeichnet, dass zur verzögerten Rückführung des Integrators (6) ein Begrenzer und Verstärker (11) vorhanden ist.

5. Einrichtung nach Anspruch 4, dadurch gekennzeichnet, dass zur Einstellung des Schwellwertes des Begrenzers und Verstärkers (11) diesem das Ausgangssignal des Differenzierers (4) zugeführt wird.

6. Einrichtung nach Anspruch 1, dadurch gekennzeichnet, dass der Integrator (6) als Verzögerung 1. Ordnung ausgelegt ist.

7. Einrichtung nach einem oder mehreren der vorhergehenden Ansprüche, dadurch gekennzeichnet, dass der Differenzierer (4) als verzögernd differenzierendes Glied (z.B. $DT_1$-Glied oder Wash out-Filter) ausgebildet ist.

## Claims

1. Device for limiting the command signals for a servomotor, in particular for servomotors actuating airplane devices like trim surfaces, with a circuit (2) with which an input (CSAS + SPILS) signal to be fed to the servomotor is modified to command signals ($\eta_{DEM}$), which it can process without entering the region of non-linear behavior, wherein the circuit (2) comprises a differentiator (4) with which the input signal (CSAS + SPILS) is differentiated and a subsequent threshold value switch (5) with following integrator (6) is provided, characterized in that the circuit (2) is connected in parallel to a main input signal path (13) carrying the input signal (CSAS + SPILS) for the servomotor (1) wherein the threshold value switch (5) when falling below or exceeding pre-determined values, which indicate that the allowable maximum servo speed is exceeded, supplies the integrator (6) with the values exceeding the pre-determined value, wherein the integrator output signal is subtracted from the input signal (CSAS + SPILS) at an adder point (7) of the device, to form the command signal ($\eta_{DEM}$).

2. Device according to claim 1, characterized in that the integrator (6) is re-settable by means of a switch (3) which is open when the threshold value of the threshold value switch 5 is exeeded and is otherwise closed.

3. Device according to claim 2 characterized in that the switch (3) comprises a pulse shaper (9) generating a pulse when the output signal of the threshold value switch (5) is lacking, through which the relais (10) is closeable, which switches the feedback signal of the integrator (6) to the input of the integrator (6).

4. Device according to claim 3 characterized in that a limiter and amplifier (11) is provided for delayed feedback to the integrator (6).

5. Device according to claim 4, characterized in that the output signal of the differentiator (4) is fed to the limiter and amplifier (11) for setting the threshold value.

6. Device according to claim 1, characterized in that the integrator (6) is designed as a delay element of first order.

7. Device according to one or more of the above claims, characterized in that the differentiator (4) is configured as a delay differentiating element (e.g. $DT_1$ element or wash-out filter).

**Revendications**

1. Dispositif pour la limitation de signaux d'instruction pour un servomoteur, en particulier pour des servomoteurs destinés à l'actionnement de dispositifs d'avion tels que des gouvernes, comprenant un montage (2) par lequel un signal d'entrée (CSAS + SPILS) devant être appliqué au servomoteur est modifié en signaux de commande ($\eta_{DEM}$) que celui-ci peut exécuter sans tomber dans le domaine d'un régime non linéaire, dans lequel le montage (2) comporte un différentiateur (4) par lequel le signal d'entrée (CSAS + SPILS) est différencié, et dans lequel est agencé un montage de valeur de seuil associé (5) pourvu d'un intégrateur (6) connecté en aval, caractérisé en ce que le montage (2) est connecté en parallèle avec une ligne de signaux d'entrée principale (13) conduisant le signal d'entrée (CSAS + SPILS) au servomoteur (1) et en ce que le montage de valeur de seuil (5), lorsque les valeurs sont inférieures ou supérieures à des valeurs données, ce qui indique un dépassement de la vitesse maximale permise pour le positionnement, applique à l'intégrateur (6) les valeurs dépassant la valeur donnée, le signal de sortie de l'intégrateur étant soustrait du signal d'entrée (CSAS + SPILS) à un emplacement de sommation (7) afin de former les signaux d'instruction ($\eta_{DEM}$).

2. Dispositif suivant la revendication 1, caractérisé en ce que l'intégrateur (6) peut être remis à l'état initial à l'aide d'un interrupteur (3) qui s'ouvre lorsque les valeurs de seuil du montage de valeur de seuil sont dépassées et qui, autrement, reste fermé.

3. Dispositif suivant la revendication 2, caractérisé en ce que l'interrupteur (3) comporte un formateur d'impulsions (9) qui déclenche une impulsion en l'absence d'un signal de sortie du montage de valeur de seuil (5), un relais (10) pouvant être fermé par le formateur, le relais commutant le signal de rétroaction de l'intégrateur (6) sur l'entrée de celui-ci.

4. Dispositif suivant la revendication 3, caractérisé en ce qu'il est pourvu d'un limiteur-amplificateur (11) pour la rétroaction retardée de l'intégrateur (6).

5. Dispositif suivant la revendication 4, caractérisé en ce que le limiteur-amplificateur (11) reçoit le signal de sortie du différentiateur (4) pour le réglage de sa valeur de seuil.

6. Dispositif suivant la revendication 1, caractérisé en ce que l'intégrateur (6) est conçu pour un retard du premier ordre.

7. Dispositif suivant l'une ou plusieurs des revendications précédentes, caractérisé en ce que le différentiateur (4) est conçu comme un élément différentiateur à retard (par exemple un élément $DT_1$ ou un filtre wash-out).